# EUROPÄISCHE PATENTANMELDUNG

(11) **EP 1 748 051 A1**
(43) Veröffentlichungstag der Anmeldung: **31.01.2007**
(21) Anmeldenummer: 06014868.1
(22) Anmeldetag: 18.07.2006
(51) Int. Cl.: C08F 8/12, C08F 20/00

(54) **Monodisperse Kationenaustauscher**

(30) Priorität: 29.07.2005 DE 102005035616
(71) Anmelder: LANXESS Deutschland GmbH, 51369 Leverkusen (DE)
(72) Erfinder: Vanhoorne, Pierre, Dr., 40789 Monheim (DE); Podszun, Wolfgang, Dr., 51061 Köln (DE); Klipper, Reinhold, Dr., 50933 Köln (DE); Halle, Olaf, Dr., 51061 Köln (DE)

(57) **Zusammenfassung**

Der Gegenstand der vorliegenden Erfindung betrifft ein Verfahren zur Herstellung von neuen monodispersen schwachsauren Kationenaustauschern vom Poly(meth)acrylsäure-Typ, die Ionenaustauscher selber sowie deren Verwendung.

## Beschreibung

Gegenstand der vorliegenden Erfindung ist ein Verfahren zur Herstellung monodisperser schwachsaurer Kationenaustauscher vom Poly(meth)acrylsäure-Typ, diese Kationenaustauscher sowie deren Verwendungen.

Aus dem Stand der Technik sind bereits heterodisperse Kationenaustauscher vom Poly-(meth)acrylsäure-Typ bekannt. Es handelt sich dabei um eine Klasse von Kationenaustauschern, die in der Praxis bei zahlreichen unterschiedlichen Anwendungen eingesetzt werden können.

Ein wichtiges Einsatzgebiet heterodisperser Kationenaustauscher vom Poly(meth)acrylsäure-Typ ist die Wasseraufbereitungstechnik, bei der mehrwertige Kationen wie beispielsweise Calcium, Magnesium, Blei oder Kupfer aber auch die Carbonatanionen entfernt werden können.

Ein bekanntes Verfahren zur Herstellung heterodisperser Kationenaustauscher vom Poly-(meth)acrylsäure-Typ ist die Hydrolyse von vernetzten Perlpolymerisaten aus (Meth)acrylmonomeren mit Säuren oder Laugen gemäß DE 10 322 441, DD 67583 oder US 5 369 132.

Die zur Hydrolyse eingesetzten vernetzten (Meth)acrylsäureester- oder (Meth)acrylnitrilharz- Perlpolymerisate werden im Stand der Technik als gelförmige oder makroporöse Harze hergestellt. Ihre Herstellung erfolgt als Mischpolymerisation nach dem Suspensionspolymerisationsverfahren. Erhalten werden dabei heterodisperse Perlpolymerisate mit einer breiten Kornverteilung im Bereich von ca. 0,2 mm bis ca. 1,2 mm.

Die heterodispersen Kationenaustauscher vom Poly(meth)acrylsäure-Typ zeigen in Abhängigkeit von der Beladungsform des Harzes, d.h. je nach Art des Gegenions, unterschiedliche Harzvolumina. Beim Übergang von der freien Säureform in die Natriumform quillt das Harz deutlich auf. Umgekehrt schrumpft es beim Übergang von der Natrium- in die freie Säureform. Beim großtechnischen Einsatz dieser heterodispersen Kationenaustauscher vom Poly(meth)acrylsäure-Typ ist also jede Beladung und Regeneration mit einem Quellen bzw. Schrumpfen verbunden. Im Verlauf eines langfristigen Einsatzes werden aber diese heterodispersen Kationenaustauscher mehrere hundertmal regeneriert. Die dabei auftretenden Schrumpf- und Quellvorgänge beanspruchen die Perlen in ihrer Stabilität so stark, dass ein Teil der Perlen Risse erhält, um schließlich sogar zu zerspringen. Es entstehen Bruchstücke, die zu Verstopfungen in den Anwendungsapparaten, den Säulen führen, den Durchfluss behindern, was wiederum zu einem erhöhten Druckverlust führt. Ferner verunreinigen die Bruchstücke das zu behandelnde Medium, bevorzugt Wasser und mindern so die Qualität des Mediums bzw. des Wassers.

Der Durchfluss des Wassers durch eine mit Perlen gefüllte Säule wird aber nicht nur durch Harzbruchstücke sondern auch durch feine Perlpolymerisate behindert. Es kommt zu einem Anstieg des Druckverlustes. Bedingt durch die Kornverteilung enthält aber ein heterodisperser Kationenaustauscher vom Poly(meth)acrylsäure-Typ Perlen unterschiedlichen Durchmessers. Die Anwesenheit feiner Perlen erhöht somit zusätzlich den Druckverlust.

Nach beendeter Beladung der Kationenaustauscher vom Poly(meth)acrylsäure-Typ mit Kationen wird das Harz mit verdünnter Salzsäure regeneriert, um für eine neue Beladung bereit zu sein. Es werden Salzsäure-Reste mit Wasser aus dem Harz gewaschen. Es wird während der Produktion der Harze eine niedrige Leitfähigkeit des vom Harz abfließenden Wassers (Waschwassers) angestrebt, da ansonsten ein verunreinigtes Wasser vorliegt. Ziel ist das Erreichen niedriger Leitfähigkeiten mit kleinen Waschwassermengen.

Zur Reduzierung des Druckverlustes und zur Verbesserung der Auswaschbarkeit ist daher der Einsatz engverteilter Kationenaustauscher vom Poly(meth)acrylsäure-Typ wünschenswert.

Engverteilte Kationenaustauscher vom Poly(meth)acrylsäure-Typ im Bereich 30 bis 500 µm werden üblicherweise durch Fraktionieren von Kationenaustauschern vom Poly(meth)acrylsäure-Typ mit breiter Teilchengrößenverteilung erhalten. Nachteilig bei diesem Verfahren ist, dass mit steigender Monodispersität die Ausbeute der erwünschten Zielfraktion bei der Fraktionierung stark abnimmt. Auch wird die mechanische bzw. osmotische Stabilität der so gewonnenen Kationenaustauscher nicht verbessert.

Aus DE 10 237 601 A1 sind monodisperse gelförmige Ionenaustauscher mit einem Durchmesser von bis zu 500 µm bekannt, die aus monodispersen, gelförmigen Perlpolymerisaten hergestellt werden, die 50 bis 99,9 Gew.-% Styrol und als Comonomere copolymerisierbare Verbindungen wie z.B. Methylmethacrylat, Ethylmethacrylat, Ethylacrylat, Hydroxyethylmethacrylat oder Acrylnitril enthalten. Beim Verfahren gemäß DE 10 237 601 A1 werden unvernetzte Saatpolymerisate verwendet. Nach Hydrolyse der monodispersen, gelförmigen Perlpolymerisate sind Kationenaustauscher erhältlich, die funktionelle Gruppen von Poly(meth)acrylsäure-Typ aufweisen. Durch den hohen Gehalt an nichtfunktionnellem Styrol ist die Totalkapazität (Anzahl der funktionellen Gruppen per Volumeneinheit des Harzes in Eq./Liter) solcher Kationenaustauscher begrenzt und für die meisten Anwendungen unzureichend.

Ausgehend vom Stand der Technik bestand die Aufgabe der vorliegenden Erfindung darin, Kationenaustauscher vom Poly(meth)acrylsäure-Typ mit hoher mechanischer als auch osmotischer Stabilität der Perlen, niedrigem Druckverlust des Perlbettes in der Anwendung sowie niedrigem Waschwasserbedarf des Kationenaustauschers selber bereitzustellen.

Gegenstand der vorliegenden Erfindung und Lösung dieser Aufgabe ist deshalb ein Verfahren zur Herstellung monodisperser Kationenaustauscher vom Poly(meth)acrylsäure-Typ dadurch gekennzeichnet, dass man
a) ein monodisperses, perlförmiges, vernetztes Perlpolymerisat als Saat bereitstellt,
b) dieses monodisperse, vernetzte Perlpolymerisat mit (Meth)acrylmonomeren, geeigneten Vernetzern und Initiatoren versetzt, wobei das Saatpolymerisat durch die (Meth)acrylmonomere aufquillt,
c) die eingequollene (Meth)acrylmonomere bei erhöhter Temperatur polymerisiert,
d) ggf. die Schritte b) und c) ein oder mehrmals wiederholt und
e) das enstandene, monodisperse, vernetzte (Meth)acrylperlpolymerisat mit Säuren oder Laugen zu einem vernetzten, monodispersen Perlpolymerisat von (Meth)acrylsäure-Typ hydrolysiert.

Als Maß für die Breite der Teilchengrößenverteilung der erfindungsgemäßen monodispersen Kationenaustauscher von (Meth)acrylsäure-Typ wird das Verhältnis aus dem 90 %-Wert (∅(90)) und dem 10 %-Wert (∅(10)) der Volumenverteilung gebildet. Der 90 %-Wert (∅(90)) gibt den Durchmesser an, der von 90 % der Teilchen unterschritten wird. In entsprechender Weise unterschreiten 10 % der Teilchen den Durchmesser des 10 %-Wertes (∅(10)). Monodisperse Teilchengrößenverteilungen im Sinne der vorliegenden Anmeldung bedeuten ∅(90)/∅(10)≤ 1,5, vorzugsweise ∅(90)/∅(10) ≤ 1,25.

Kationenaustauscher vom Poly(meth)acrylsäure-Typ sind schwachsauer und enthalten polymerisierte Einheiten von Acrylsäure bzw. Methacrylsäure.

Die im Verfahrensschritt a) bereitgestellten monodispersen, vernetzten Saat-Perlpolymerisate können nach verschiedenen Methoden hergestellt werden.

Eine einfache Methode zur Herstellung monodisperser Perlpolymerisate besteht in der Fraktionierung von Perlpolymerisaten mit heterodisperser Verteilung. Diese Fraktionierung kann beispielsweise durch Sieben, Windsichten oder durch Klassieren bzw. fraktionierende Sedimentation erfolgen.

Bevorzugt werden Methoden, bei denen die Monodispersität im Herstellprozess selbst eingestellt wird. Beim Verdüsungsverfahren bzw. beim "Jetten" wird eine Monomermischung bestehend aus einem oder mehreren verschiedenen Vinylmonomeren sowie einer oder mehrerer Vernetzer einem oder mehreren Initiatoren in eine mit der Monomermischung im wesentlichen nicht mischbaren Flüssigkeit eingedüst, wobei Tröpfchen einheitlicher Teilchengröße gebildet werden. Durch die Anwendung einer Longitudinal-Schwingung geeigneter Frequenz kann die Ausbildung von monodispersen Tröpfchen unterstützt werden. Die Schwingungsanregung kann durch Einwirkung periodischer Druckschwankungen, wie Schallwellen geschehen. Weitere Einzelheiten zur Schwingungsanregung werden in EP 46535 beschrieben.

In einer besonderen Ausführungsform der vorliegenden Erfindung werden die durch Verdüsung und Schwingungsanregung erzeugten monodispersen Tröpfchen mikroverkapselt. Auf diese Weise ist es möglich, Perlpolymerisate mit besonders hoher Monodispersität zu erzeugen.

Für die Mikroverkapselung der Monomertröpfchen kommen die für den Einsatz als Komplexkoazervate bekannten Materialien in Frage, insbesondere Polyester, natürliche oder synthetische Polyamide, Polyurethane, Polyharnstoffe.

Als natürliches Polyamid ist beispielsweise Gelatine besonders gut geeignet. Diese kommt insbesondere als Koazervat oder Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid oder Methacrylamid. Besonders bevorzugt werden Acrylsäure oder Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP 0 046 535 B1 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wässrigen Phase gelösten Reaktivkomponente (beispielsweise einem Amin), zur Reaktion gebracht wird.

Die erzeugten monodispersen Tröpfchen aus dem Monomergemisch können in einer Säule anpolymerisiert und anschließend in einem Polymerisationskessel auspolymerisiert werden, wobei monodisperse Perlpolymerisate entstehen. Diese Methode wird in US 3922255 dargestellt.

Die Herstellung monodisperser, vernetzter, für das erfindungsgemäße Verfahren als Saat geeignete Perlpolymerisate kann auch ausgehend von einem durch Dispersionspolymerisation erhaltenen monodispersen Startpolymerisat nach dem Saat-Zulauf-Verfahren erfolgen.

In diesem Fall wird in einem ersten Schritt ein unvernetztes monodisperses Startpolymerisat im Bereich 0,5 bis 20 µm durch Dispersionspolymerisation in einem nicht-wässrigen Lösungsmittel hergestellt. Dieses kleine Startpolymerisat wird anschließend in Wasser dispergiert und durch wiederholte Zugabe von Monomer, Initiator und ggf. Vernetzer in Form einer wässrigen Emulsion, Einquellen der Monomermischung in das Perlpolymerisat und anschließendes Polymerisieren zu einem Perlpolymerisat des gewünschten Durchmessers aufgequollen. Dabei wird die Monodispersität des Startpolymerisats auf das gewünschte Perlpolymerisat übertragen. Monodisperse Perlpolymerisate nach diesem Verfahren sind fast ausschließlich Styrolhaltig und werden zum Beispiel in EP 448 391, EP 288 006 und DE 10 237 601 A1 beschrieben, deren Inhalte von der vorliegenden Anmeldung mit umfasst werden.

Weitere Ausführungsformen zur Herstellung monodisperser, vernetzter Perlpolymerisate nach dem Saat-Zulauf-verfahren werden beispielsweise in US-A 4 444 961, EP 46 535 B1, US 4 419 245, WO 93/12167 oder EP 101 943 B1 beschrieben, deren Inhalte von der vorliegenden Anmeldung mit umfasst werden.

Die Saat-Perlpolymerisate können im wesentlichen aus (Meth)acrylestern bestehen.

Unter (Meth)acrylester werden die Ester der Acrylsäure und Methacrylsäure verstanden. Genannt seien Ethylacrylat, Methylacrylat, n-Butylacrylat, t-Butylacrylat, 2-Ethylhexylacrylat, Benzylacrylat, Ethylmethacrylat, Methylmethacrylat, n-Butylmethacrylat, t-Butylmethacrylat und 2-Ethylhexylmethacrylat. Bevorzugt werden Methylmethacrylat und Methylacrylat.

Als Saat geeignete (Meth)acrylat-Perlpolymerisate enthalten 0,05 bis 8 Gew.%, vorzugsweise 0,1 bis 5 Gew.% Vernetzer. Geeignete Vernetzer für die Saat-Perlpolymerisate sind multifunktionelle ethylenisch ungesättigte Verbindungen wie beispielsweise Butadien, Isopren, Divinylbenzol, Divinyltoluol, Trivinylbenzol, Divinylnaphtalin, Trivinylnaphtalin, Divinylcyclohexan, Trivinylcyclohexan, Triallycyanurat, Triallylamin, 1,7-Octadien, 1,5-Hexadien, Cyclopentadien, Norbornadien, Diethylenglykoldivinylether, Triethylenglykoldivinylether, Tetraethylenglykoldivinylether, Butandioldivinylether, Ethylenglycoldivinylether, Cyclohexandimethanoldivinylether, Hexandioldivinylether und Trimethylolpropantrivinylether. Divinylbenzol ist in vielen Fällen geeignet. Kommerzielle Divinylbenzolqualitäten, die neben den Isomeren des Divinylbenzols auch Ethylvinylbenzol enthalten, sind ausreichend. Es können auch Mischungen unterschiedlicher Vernetzer, z.B. Mischungen aus Divinylbenzol und Divinylether eingesetzt werden.

Es wurde gefunden, dass auch Styrolcopolymerisate, sofern sie niedrig vemetzt sind als Saat-Perlpolymerisate gut geeignet sind. Mit niedrig vernetzt ist gemeint, dass das Copolymerisat 0,05 bis 5 Gew.%, vorzugsweise 0,1 bis 1 Gew.% Vernetzer enthält.

Im Verfahrensschritt b) wird das Saat-Perlpolymerisat mit (Meth)acrylmonomeren, geeigneten Vernetzern und Initiatoren versetzt.

Unter (Meth)acrylmomonomere werden im vorliegenden Zusammenhang (Meth)acrylester, (Meth)acrylamide, (Meth)acrylnitril, Acrylsäure, Methacrylsäure, Acrylsäurechlorid und Methacrylsäurechlorid verstanden. (Meth)acrylester sind die im Verfahrensschritt a) beschriebenen Verbindungen. Unter (Meth)acrylamide werden substituierte und nicht substituierte Amide der Acrylsäure und Methacrylsäure verstanden. Genannt seien Acrylamid, Methacrylamid, Dimethylacrylamid, Dimethylmethacrylamid, Diethylacrylamid, Diethylmethacrylamid. Bevorzugt werden Acrylamid und Methacrylamid. (Meth)acrylnitril umfasst Acrylnitril und Methacrylnitril. Besonders bevorzugt wird im Sinne der vorliegenden Erfindung Acrylsäuremethylester eingesetzt.

Geeignete Vernetzer im Sinne der vorliegenden Erfindung sind die im Verfahrensschritt a) bereits beschriebenen Verbindungen.

Der Anteil des Vernetzers am Monomergemisch beträgt 2 bis 50 Gew.%, bevorzugt 4 bis 20 Gew.%, besonders bevorzugt 4 bis 10 Gew.%.

Für das erfindungsgemäße Verfahren geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azo-bis(isobutyronitril) oder 2,2'-Azobis(2-methylisobutyronitril).

Die Initiatoren werden im Allgemeinen in Mengen von 0,05 bis 2,5 Gew.-%, vorzugsweise 0,1 bis 1,5 Gew.-%, bezogen auf die Monomeren-Mischung, angewendet.

Als weitere Zusätze in dem Monomergemisch aus (Meth)acrylmonomeren, geeigneten Vernetzern und Initiatoren können Porogene verwendet werden, um im kugelförmigen Polymerisat eine makroporöse Struktur zu erzeugen. Hierfür sind organische Lösungsmittel geeignet, die sich mit den (Meth)acrylmonomeren mischen. Beispielhaft seien Hexan, Cyclohexan, Octan, Isooctan, Isododecan, Methylethylketon, Methylisobutylketon, Butanol oder Octanol und deren Isomeren genannt. Geeignete Porogene werden auch in DE 1 045 102, DE 1 113 570 und US-A 4 382 124 beschrieben.

Der für die Synthese erfindungsgemäßer makroporöser Kationenaustauscher eingesetzte Anteil an Porogen liegt bei 3 bis 40 Gew.%, bevorzugt bei 5 bis 20 Gew.-%, bezogen auf das Monomergemisch.

Die Begriffe makroporös bzw. gelförmig sind in der Fachliteratur beispielsweise in Seidl, Malinsky, Dusek, Heitz, adv. Polymer Sci., Vol. 5 Seiten 113 bis 213 (1967) eingehend beschrieben worden.

Im Verfahrensschritt c) werden die monodispersen (Meth)acrylperlpolymerisate bei erhöhter Temperatur durch Polymerisation des entsprechenden Monomergemisches, in einer wässrigen Phase erzeugt.

Dabei kann die wässrige Phase einen gelösten Polymerisationsinhibitor enthalten. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid oder Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol oder Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 bis 1000 ppm (bezogen auf die wässrige Phase), vorzugsweise 10 bis 500 ppm, besonders bevorzugt 10 bis 250 ppm.

Die Polymerisation des Monomergemisches erfolgt gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet sind Gelatine und Methylhydroxyethylcellulose. Die Einsatzmenge der Schutzkolloide beträgt im Allgemeinen 0,05 bis 1 Gew.-% bezogen auf die wässrige Phase, vorzugsweise 0,05 bis 0,5 Gew.-%.

Die Polymerisation zum monodispersen vernetzten (Meth)acrylpolymerisat kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 13 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 bis 500 mmol/l, vorzugsweise 2,5 bis 100 mmol/l.

Die Rührgeschwindigkeit bei der Polymerisation ist weniger kritisch und hat im Gegensatz zur herkömmlichen Perlpolymerisation kaum Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von der Summe aus Saat-Perlpolymerisat und Monomergemisch zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im Allgemeinen zwischen 50 bis 180°C, vorzugsweise zwischen 55 und 130°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Perlpolymerisat mit üblichen Methoden, beispielsweise durch Filtrieren oder Dekantieren, isoliert und gegebenenfalls gewaschen.

Eine besonders vorteilhafte Ausführungsform der vorliegenden Erfindung ist ein mehrstufiger Zulauf-Prozess entsprechend Verfahrensschritt d). Dabei wird das (Meth)acrylpolymerisat in mehreren Einzelschritten hergestellt. Zum Beispiel wird ein als Saat geeignetes monodisperses perlförmiges Polymerisat auf der Basis von Styrol-Divinylbenzol erzeugt, dieses mit einem ersten Gemisch aus (Meth)acrylmonomeren, Vernetzer und Initiator gefüttert und polymerisiert, wobei das Copolymerisat I erhalten wird. Das Copolymerisat I wird mit weiterer Monomermischung aus (Meth)-acrylmonomeren, Vernetzer und Initiator gefüttert und polymerisiert, wobei das erfindungsgemäße monodisperse vernetzte (Meth)acrylperlpolymerisat entsteht.

Die mittlere Teilchengröße der vernetzten (Meth)acryl-Perlpolymerisate aus Verfahrensschritt c) oder d) beträgt 10 - 1000 µm, vorzugsweise 100 - 1000 µm, besonders bevorzugt 200 bis 800 µm.

Im Verfahrensschritt e) des erfindungsgemäßen Verfahrens erfolgt die Hydrolyse des monodispersen vernetzten (Meth)acryl-Perlpolymerisats aus Verfahrensschritt c) oder d).

Geeignete Hydrolysemittel sind dabei starke Basen oder starke Säuren wie z. B. Natronlauge oder Schwefelsäure. Die Konzentration des Hydrolysemittels beträgt im Allgemeinen 5 bis 50 Gew.-%. Die Hydrolyse erfolgt bevorzugt bei Temperaturen von 50 °C bis 200 °C, besonders bevorzugt 80 °C bis 180 °C. Die Dauer der Hydrolyse beträgt bevorzugt 1 bis 24 h, besonders bevorzugt 1 bis 12 h.

Nach der Hydrolyse wird das Reaktionsgemisch aus Hydrolyseprodukt und restlichem Hydrolysemittel auf Raumtemperatur abgekühlt und zunächst mit Wasser verdünnt und gewaschen.

Bei Verwendung von Natronlauge als Hydrolysemittel fällt der schwachsaure Kationenaustauscher in der Natrium-Form an. Für manche Anwendungen ist es günstig, den Kationenaustauscher von der Natrium-Form in die saure Form zu überführen. Diese Umladung erfolgt mit Schwefelsäure einer Konzentration von 5 bis 50 Gew.-%, vorzugsweise 10 bis 20 Gew.-%.

Falls gewünscht kann der erfindungsgemäß erhaltene schwachsaure Kationenaustauscher zur Reinigung mit entionisiertem Wasser bei Temperaturen von 70 bis 145 °C, vorzugsweise von 105 bis 130 °C behandelt werden.

Gegenstand der vorliegenden Erfindung sind auch die monodispersen Kationenaustauscher vom Poly(meth)acrylsäure Typ erhältlich durch
a) Bereitstellen eines monodispersen, perlförmigen, vernetzten Perlpolymerisat als Saat,
b) Versetzen dieses monodispersen, vernetzten Perlpolymerisat mit (Meth)acrylmonomeren, geeigneten Vernetzern und Initiatoren, wobei das Saatpolymerisat durch die (Meth)acrylmonomere aufquillt,
c) Polymerisieren der eingequollenen (Meth)acrylmonomere bei erhöhter Temperatur,
d) ggf. einfache oder mehrfache Wiederholung der Schritte b) und c) und
e) Hydrolysieren des enstandenen, monodispersen, vernetzten (Meth)acrylperlpolymerisat mit Säuren oder Laugen zu einem vernetzten, monodispersen (Meth)acrylsäure-Typ Perlpolymerisat.

Die erfindungsgemäßen monodispersen Kationenaustauscher weisen eine besondere
osmotische und mechanische Stabilität auf. Aufgrund dieser günstigen Eigenschaften und der Monodispersität sind diese Kationenaustauscher für zahlreiche Anwendungen geeignet.

Die vorliegende Erfindung betrifft deshalb auch die Verwendung der erfindungsgemäßen monodispersen Kationenautauscher vom Poly(meth)acrylsäure-Typ
- zur Entfernung von Kationen, Farbpartikeln oder organischen Komponenten aus wässrigen oder organischen Lösungen,
- zur Enthärtung im Neutralaustausch von wässrigen oder organischen Lösungen,
- zur Reinigung und Aufarbeitung von Wässern der chemischen Industrie, der Elektronik-Industrie und aus Kraftwerken,
- Zur Abtrennung und Reinigung von biologisch wirksamen Komponenten wie z.B. Antibiotika, Enzyme, Peptide und Nukleinsäuren aus deren Lösungen, beispielsweise aus Reaktionsgemischen und aus Fermentationsbrühen.

Weiterhin können die erfindungsgemäßen Kationenaustauscher in Kombination mit gelförmigen und/oder makroporösen Anionenaustauschern zur Vollentsalzung wässriger Lösungen und/oder Kondensaten, insbesondere in der Trinkwasseraufbereitung, eingesetzt werden.

Die vorliegende Erfindung betrifft auch
- Verfahren zur Reinigung und Aufarbeitung von Wässern der chemischen Industrie, der Elektronik-Industrie und aus Kraftwerken
- Verfahren zur Entfernung von Kationen, Farbpartikeln oder organischen Komponenten aus wässrigen oder organischen Lösungen
- Verfahren zur Enthärtung im Neutralaustausch von wässrigen oder organischen Lösungen
- Verfahren zur Abtrennung und Reinigung von biologisch wirksamen Komponenten wie z.B. Antibiotika, Enzyme, Peptide und Nukleinsäuren aus deren Lösungen, beispielsweise aus Reaktionsgemischen und aus Fermentationsbrühen
unter Einsatz der erfindungsgemäßen Kationenaustauscher vom Poly(meth)acrylsäure-Typ.

### Beispiel 1

### Verfahrensschritte a-c) Herstellung eines Copolymerisates 1

In einem 4 1 Glasreaktor wurde eine wässrige Lösung aus 3,6 g Borsäure und 1,0 g Natriumhydroxid in 1218 g entionisiertem Wasser vorgelegt. Hierzu wurden 264,7 g monodisperses mikroverkapseltes Saatpolymerisat enthaltend 99,38 Gew.-% Styrol, 0,5 Gew.-% Divinylbenzol und 0,12 Gew.% Ethylstyrol gegeben. Divinylbenzol wurde als handelsübliches Isomerengemisch aus 80,6 Gew.-% Divinylbenzol und 19,4 Gew.-% Ethylstyrol eingesetzt. Das Saatpolymerisat wurde nach EP 0 046 535 B1 hergestellt und die Kapselwand des Saatpolymerisats bestand aus einem mit Formaldehyd gehärteten Komplexkoazervat aus Gelatine und einem Acrylamid/Acrylsäure-Copolymerisat. Die mittlere Teilchengrösse des Saatpolymerisats betrug 244 µm, 97 Vol.-% der Teilchen lagen im Bereich von 220 bis 268 µm. Das Gemisch wurde mit einer Rührerdrehzahl von 220 U/min gerührt. Innerhalb von 30 Minuten wurde ein Gemisch aus 605,1 g Methylacrylat, 30,2 g Diethylenglykoldivinylether und 3,39 g Dibenzoylperoxid (75 gew.-%ig) zugegeben. Das Polymerisationsgemisch wurde 2 Stunden bei Raumtemperatur gerührt, wobei der Gasraum mit Stickstoff gespült wurde. Danach wurde eine Lösung von 2,7 g Methylhydroxyethylcellulose in 132,3 g entionisiertem Wasser zugesetzt. Der Ansatz wurde innerhalb von 75 Minuten auf 63°C aufgeheizt und 5 Stunden bei dieser Temperatur belassen. Anschließend wurde innerhalb von 60 Minuten auf 95°C erwärmt und weitere 120 Minuten bei dieser Temperatur gerührt. Der Ansatz wurde nach dem Abkühlen über ein 125 µm-Sieb mit entionisiertem Wasser gewaschen und dann 18 Stunden bei 80°C im Trockenschrank getrocknet. Man erhielt 713 g eines kugelförmigen Copolymerisats I mit einer mittleren Teilchengröße von 335 µm und einem 0(90)/0(10)-Wert von 1,44.

### Verfahrensschritt d) Herstellung eines Copolymerisates II

In einem 4 1 Glasreaktor wurde eine wässrige Lösung aus 1,08 g Borsäure und 0,34 g Natriumhydroxid in 917 g entionisiertem Wasser vorgelegt. Hierzu wurden 288,7 g Copolymerisat I gegeben. Das Gemisch wurde mit einer Rührerdrehzahl von 220 U/Minute gerührt. Innerhalb von 30 Minuten wurde ein Gemisch aus 439,6 g Methylacrylat, 21,9 g Diethylenglykoldivinylether und 2,46 g Dibenzoylperoxid (75 gew.-%ig) zugegeben. Das Gemisch wurde 2 Stunden bei Raumtemperatur gerührt, wobei der Gasraum mit Stickstoff gespült wurde. Danach wurde eine Lösung von 1,83 g Methylhydroxyethylcellulose in 89,8 g entionisiertem Wasser zugesetzt. Der Ansatz wurde innerhalb von 75 Minuten auf 60°C aufgeheizt und 5 Stunden bei dieser Temperatur belassen. Anschließend wurde innerhalb von 60 Minuten auf 95°C erwärmt und weitere 120 Minuten bei dieser Temperatur gerührt. Der Ansatz wurde nach dem Abkühlen über ein 125 µm-Sieb mit entionisiertem Wasser gewaschen und dann 18 Stunden bei 80°C im Trockenschrank getrocknet. Man erhielt 594 g eines kugelförmigen Copolymerisats II mit einer mittleren Teilchengröße von 470 µm und einem 0(90)/0(10)-Wert von 1,46.

Verfahrensschritt e) Hydrolyse des Copolymerisates II.

Verseifen des des monodispersen, vernetzten, Acrylsäuremethylester-Copolymerisates II aus Verfahrensschritten a-d) mit Natriumhydroxid

In einem 4 Liter Planschliffgefäß mit Gitterrührer, Destillationsbrücke, Temperaturfühler sowie Thermostat und Temperaturschreiber wurden 807 g entionisiertes Wasser mit 2104 g 50 gew.-%iger NaOH - Lsg bei 200 U/min vorgelegt. Unter Rühren wurden 245 g Copolymerisat II portionsweise eingetragen. Man heizte innerhalb von 2,5 Stunden auf Rückfluß. Dann wurde 5 Stunden bei Rückfluß gerührt und dabei wurden 600 ml Gemisch aus Methanol und Wasser destilliert. Danach wurde auf Raumtemperatur abgekühlt. Das verseifte Copolymerisat II wurde in einer Säule mit entionisiertem Wasser gewaschen, bis der pH-Wert neutral war. Man erhielt 1500 ml monodispersen, schwachsauren Kationenaustauscher 1 in der Natriumform.

### Umladen des schwachsauren Kationenaustauschers 1

In einer Säule wurden 1500 ml des feuchten, monodispersen, schwachsauren Kationenaustauschers 1 in der Natriumform mit 1800 ml 6 gew.-%iger Schwefelsäure eluiert und anschließend mit entionisiertem Wasser gewaschen, bis der pH-Wert neutral war. Man erhielt 800 ml monodispersen, schwachsauren Kationenaustauscher 1 in der sauren Form mit einem Wassergehalt von 62,6 Gew.-%.

Die mittlere Teilchengröße betrug 560 µm und der ∅(90)/∅(10)-Wert war 1,46.

Totalkapazität des Harzes : 3,53 mol / 1

### Beispiel 2

Verfahrensschritt a) Herstellung eines monodispersen, schwachvernetzten Saatpolymerisats gemäß DE 10237601.

### i) Herstellung eines unvernetzten Saatpolymerisats durch Dispersionspolymerisation

In einem 50 Liter Va-Stahl-Reaktor wurden 24 kg n-Butanol und 1800 g Polyvinylpyrrolidon (Luviskol® K30) 60 min gerührt, wobei eine homogene Lösung erhalten wurde. Der Reaktor wurde 3 Mal evakuiert und anschließend mit Stickstoff geflutet und es wurden unter weiterem Rühren bei 120 rpm 3000 g Styrol innerhalb weniger Minuten zugegeben. Der Reaktor wurde auf 80°C erhitzt. Bei Erreichen einer Temperatur von 71°C wurde eine auf 40°C temperierte Lösung aus 30 g Azodiisobuttersäurenitril und 1170 g n-Butanol auf einmal zugegeben. Die Rührgeschwindigkeit wurde für 2 Min. auf 180 Upm erhöht und danach auf 90 rpm gestellt. Das Reaktionsgemisch wurde 20 h bei 80°C gehalten. Danach wurde das Reaktionsgemisch auf Raumtemperatur abgekühlt, das entstandene Polymerisat durch Zentrifugieren isoliert, zweimal mit Methanol und zweimal mit Wasser gewaschen.

Man erhielt auf diese Weise 7262 g einer wässrigen Dispersion des Saatpolymerisats i) mit einem Feststoffanteil von 15,7 Gew.-%. Die Teilchengröße betrug 2,8 µm, ∅(90)/∅(10) betrug 1,29.

### ii) Herstellung eines unvernetzten Saatpolymerisats ii)

In einem Kunsstoffbehälter wurde aus 5915 g Styrol, 182,2 g 75 gew.-%iges Dibenzoylperoxid, 4550 g Wasser, 65,9 g ethoxyliertes Nonylphenol (Arkopal® N060), 9,5 g Sulfobernsteinsäureisooctylester-Natriumsalz, 36 g 3,3',3''5,5'5''-hexa-tert-butyl-α,α',α "-(mesitylen-2,4,6-triyl)tri-p-kresol (Inhibitor Irganox® 1330) und 4,6 g Resorcin mit einem Ultraturrax (3 Min. bei 13500 rpm) eine feinteilige Emulsion-I erzeugt. In einem 50 Liter VA-Stahl-Reaktor, der mit einem Stickstoffstrom von 20 1/h gespült wurde, wurde eine Lösung aus 182 g Methylhydroxyethylcellulose, 22609 g entionisiertem Wasser, 4646 g wässrige Dispersion des Saatpolymerisats i) und 1365 g Methanol eingefüllt. Bei Raumtemperatur wurde unter Rühren die feinteilige Emulsion-I innerhalb von 3 Stunden mit konstanter Geschwindigkeit zugepumpt. Der Ansatz wurde dann 1 Stunde bei Raumtemperatur belassen, innerhalb einer Stunde auf 80 °C erhitzt und 9 Stunden bei 80°C polymerisiert. Danach wurde das Reaktionsgemisch auf Raumtemperatur abgekühlt, das entstandene Polymerisat durch Zentrifugieren isoliert, zweimal mit Methanol und zweimal mit Wasser gewaschen und in Wasser dispergiert. Man erhielt auf diese Weise 6670 g einer wässrigen Dispersion des Saatpolymerisats ii) mit einem Feststoffanteil von 35,7 Gew.-%. Die Teilchengröße betrug 5,2 µm, ∅(90)/∅ (10) betrug 1,33.

### Herstellung der Saatpolymerisate iii) bis viii)

Der Schritt ii) wurde wiederholt, allerdings wurden eingesetzt:
- beim Schritt iii) eine Dispersion des Saatpolymerisats ii);
- beim Schritt iv) eine Dispersion des Saatpolymerisats iii).
   Ab dem Schritt v) wurden alle Ansätze auf 1/20tel der Menge reduziert und in einem 4 Liter Glasreaktor durchgeführt.
- Beim Schritt v) wurde eine Dispersion des Saatpolymerisats iv) und eine Emulsion hergestellt aus 300 g Styrol und 1,14 g 80 gew.-%igem Divinylbenzol eingesetzt. Es wurden weder Resorcin noch Methanol zugegeben und die Nachrührzeit bei Raumtemperatur betrug 13 h statt 1 h;
- beim Schritt vi) wurde der Schritt v) wiederholt, allerdings wurde eine Dispersion des Saatpolymerisats v) eingesetzt
- beim Schritt vii) wurde der Schritt vi) wiederholt, allerdings wurde eine Dispersion des Saatpolymerisats vi) und eine Emulsion hergestellt mit einem Gemisch aus 200 g Styrol, 100 g Methylacrylat, 0,38 g Diethylenglykoldivinylether (DEGDVE) und 0,76 g 80 gew.-%igem Divinylbenzol eingesetzt und es wurde 14 h bei Raumtemperatur nachgerührt;
- beim Schritt viii) wurde der Schritt vii) wiederholt, allerdings wurde eine Dispersion des Saatpolymerisats vii) und eine Emulsion hergestellt mit einem Gemisch aus 100 g Styrol, 200 g Methylacrylat, 0,76 g Diethylenglykoldivinylether (DEGDVE) und 0,38 g 80 gew.-%igem Divinylbenzol eingesetzt. Die Emulsion wurde während Herstellung und Dosierung auf 0 bis 5°C gehalten und der Ansatz wurde nach Ende der Dosierung 14 h bei Raumtemperatur belassen und 7 h auf 80°C erhitzt.

Die entstandenen Perlpolymerisate werden in folgender Tabelle aufgelistet:

| Saatpolymerisat | Monomere | Teilchengröße (µm) | ∅(90)/∅(10) |
|---|---|---|---|
| i) | 100 % Styrol | 2,8 | 1,29 |
| ii) | 100 % Styrol | 5,2 | 1,33 |
| iii) | 100 % Styrol | 9,5 | n.b. |
| iv) | 100 % Styrol | 19 | n.b. |
| v) | 99,62 % Styrol | 38 | n.b. |
| | 0,3 % Divinylbenzol | | |
| | 0,08 % Ethylvinylbenzol | | |
| vi) | 99,62 % Styrol | 84 | n.b. |
| | 0,3 % Divinylbenzol | | |
| | 0,08 % Ethylvinylbenzol | | |
| vii) | 66,7 % Styrol | 171 | 1,46 |
| | 33,3 % Methylacrylat | | |
| | 0,2 % Divinylbenzol | | |
| | 0,15 % DEGDVE | | |
| viii) | 33,3 % Styrol | 335 | 1,46 |
| | 66,7 % Methylacrylat | | |
| | 0,1 % Divinylbenzol | | |
| | 0,3 % DEGDVE | | |

### Verfahrensschritte b-c)

### Herstellung eines Copolymerisates III

In einem Kunsstoffbehälter wurde bei einer Temperatur zwischen 0 und 5°C aus 285 g Methylacrylat, 15 g Diethylenglykoldivinylether, 0,03 g Hydrochinon, 10 g Dibenzoylperoxid (75 Gew.-%), 500 g Wasser, 3,62 g ethoxyliertes Nonylphenol (Arkopal® N060), 0,50 g Sulfobernsteinsäureisooctylester-Natriumsalz und 2 g 3,3',3''5,5'5''-hexa-tert-butyl-alpha, alpha', alpha"-(mesitylen-2,4,6-triyl)tri-p-kresol (Inhibitor Irganox® 1330) mit einem Ultraturrax (3 Min. bei 10000 rpm) eine feinteilige Emulsion-II erzeugt.

In einem 4 Liter Dreihalskolben, der mit einem Stickstoffstrom von 20 1/h gespült wurde, wurden 10 g Methylhydroxyethylcellulose in 2245 g entionisiertem Wasser vorgelegt und 20h bei 70 °C gerührt. Nach Abkühlen wurden 113,6 g einer 35,2 gew.-%ige wässrigen Dispersion des Saatpolymerisats viii) und 786,4 g entionisiertes Wasser eingefüllt. Bei Raumtemperatur wurde unter Rühren die zwischen 0 und 5°C gehaltene feinteilige Emulsion-II innerhalb von 30 Minuten mit konstanter Geschwindigkeit zugepumpt. Der Ansatz wurde dann innerhalb 30 Minuten auf 80 °C erhitzt und 5 Stunden bei dieser Temperatur gerührt. Danach wurde das Reaktionsgemisch auf Raumtemperatur abgekühlt, das entstandene Polymerisat abfiltriert, mit Wasser gewaschen und feucht abgepackt. Man erhielt auf diese Weise 431 g eines feuchten monodispersen Copolymerisats III mit einem Feststoffanteil von 36 Gew.-%. Die Teilchengröße betrug 650 µm.

### Verfahrensschritt e)

### Hydrolyse des monodispersen, vernetzten, Acrylsäuremethylester-Copolymerisates III aus Verfahrensschritte a-c) mit Natriumhydroxid.

### Verseifen des Copolymerisats III

In einem 4 Liter Planschliffgefäß mit Gitterrührer, Temperaturfühler und Thermostat wurden 178 g entionisiertes Wasser und 380 g des feuchten Copolymerisats III (entspricht 137 g trocken) vorgelegt. Die Dispersion wurde unter Rühren (200 U/min) auf Rückfluß gebracht und es wurden innerhalb 2 Stunden 1176 g 50 gew.-%iger NaOH - Lösung zudosiert. Innerhalb 5 Stunden auf Rückflußtemperatur destillierten 300 ml eines Methanol/Wasser Gemisches. Danach wurde auf Raumtemperatur abgekühlt. Das Harz wurde in einer Säule mit entionisiertem Wasser gewaschen, bis der pH-Wert neutral war. Man erhielt 3500 ml monodispersen, schwachsauren Kationenaustauscher 2 in der Natriumform.

### Umladen des schwachsauren Kationenaustauschers 2

In einer Säule wurden die 3500 ml des feuchten, monodispersen, schwachsauren Kationenaustauschers 2 in der Natriumform mit 6 Liter 6 gew.-%iger Schwefelsäure eluiert und anschließend mit entionisiertem Wasser gewaschen, bis der pH-Wert neutral war. Man erhielt 1000 ml monodispersen, schwachsauren Kationenaustauscher 2 in der sauren Form mit einem Wassergehalt von 72,5 Gew.-%. Die mittlere Teilchengröße betrug 980 µm, ∅(90)/∅(10) betrug 1,48. Die Totalkapazität des Harzes betrug 2,05 mol / l.

### Untersuchungsmethoden:

### Bestimmung der Totalkapazität des Harzes

In einem 100 ml Messzylinder werden unter voll entsalztem Wasser auf einem Vibriertisch 55 ml Austauscher in der Lieferform eingerüttelt und in ein Filterrohr gespült. 300 ml 15%ige Salzsäure werden innerhalb von 60 Minuten hinzudosiert. Anschließend wird mit entionisertem Wasser gewaschen, bis das Eluat neutral ist. Von dem Harz werden 50 ml eingerüttelt und in ein Filterrohr gespült. 600 ml 1 normalen Natronlauge werden innerhalb von 60 Minuten hinzudosiert und das Eluat wird in einem 1 Liter Erlenmeyerkolben aufgefangen. Das Harz wird mit 200 ml entionisertes Wasser gewaschen, wobei das Eluat ebenfalls in dem 1 Liter Erlenmeyerkolben aufgefangen wird. Der Erlenmeyerkolben wird mit vollentsalztem Wasser bis zur Marke aufgefüllt und gemischt. 50 ml Lösung werden in einem Becherglas mit 50 ml vollentsalztem Wasser verdünnt und unter Verwendung einer pH-Elektrode mit 0,1 n Salzsäure bis pH 4,3 titriert.

Totalkapazität (TK): die Totalkapazität ist ein Maß für die Menge an saure Gruppen im Harz.

Dimension : mol saure Gruppen pro Liter Harz

Bestimmung der TK

(30 - Verbrauch) / 2,5 = mol/Liter Harz in der sauren Form

## Patentansprüche

1. Verfahren zur Herstellung monodisperser Kationenaustauscher vom Poly(meth)acrylsäure-Typ, **dadurch gekennzeichnet, dass** man
a) ein monodisperses, perlförmiges, vernetztes Perlpolymerisat als Saat bereitstellt,
b) dieses monodisperse, vernetzte Perlpolymerisat mit (Meth)acrylmonomeren, geeigneten Vernetzern und Initiatoren versetzt, wobei das Saatpolymerisat durch die (Meth)acrylmonomere aufquillt,
c) die eingequollene (Meth)acrylmonomere bei erhöhter Temperatur polymerisiert,
d) ggf. die Schritte b) und c) ein oder mehrmals wiederholt und
e) das enstandene, monodisperse, vernetzte (Meth)acrylperlpolymerisat mit Säuren oder Laugen zu einem vernetzten, monodispersen Perlpolymerisat von (Meth)acrylsäure-Typ hydrolysiert.

2. Verfahren gemäß Anspruch 1, **dadurch gekennzeichnet, dass** das im Verfahrensschritt a) bereitgestellte vernetzte Perlpolymerisat durch eine Kombination von Verdüsung (Jetting) und Polymerisation erzeugt wird.

3. Verfahren gemäß Anspruch 1, **dadurch gekennzeichnet, dass** das im Verfahrensschritt a) bereitgestellte vernetzte Perlpolymerisat durch ein Saat-Zulauf-Verfahren erzeugt wird.

4. Verfahren gemäß Anspruch 1, **dadurch gekennzeichnet, dass** das im Verfahrensschritt a) bereitgestellte vernetzte Perlpolymerisat durch Fraktionierung eines heterodispersen vernetzten Perlpolymerisat erzeugt wird.

5. Verfahren gemäß einem der Ansprüche 2 oder 3, **dadurch gekennzeichnet, dass** das vernetzte Perlpolymerisat mit einem Komplexkoazervat mikroverkapselt ist.

6. Verfahren gemäß einem der Ansprüche 1 bis 5, **dadurch gekennzeichnet, dass** das vernetzte Perlpolymerisat polymerisierte Einheiten von Styrol, Divinylbenzol und Ethylvinylbenzol enthält.

7. Verfahren gemäß einem der Ansprüche 1 bis 6, **dadurch gekennzeichnet, dass** als (Meth)acrylmönomere Methylacrylat, Methylmethacrylat, Acrylsäure, Methacrylsäure, Acrylnitril, Methacrylnitril allein oder im Gemisch eingesetzt werden.

8. Verfahren gemäß einem der Ansprüche 1 bis 7, **dadurch gekennzeichnet, dass** zu den (Meth)acrylmonomeren als Vernetzer Divinylbenzol, Divinyltoluol, Trivinylbenzol, Diethylenglykoldivinylether, Triethylenglykoldivinylether, Tetraethylenglykoldivinylether, Butandioldivinylether, Ethylenglykoldivinylether, Cyclohexandimethanoldivinylether, Hexandioldivinylether, Trimethylolpropantrivinylether allein oder im Gemisch zugesetzt werden.

9. Verfahren gemäß einem der Ansprüche 1 bis 8, **dadurch gekennzeichnet dass** zu den (Meth)acrylmonomeren als Porogen Methyisobutylketon, Hexan, Caclohexan, Octan, Isooctan, Isododecan, n-Butanol, 2-Butanol, Isobutanol, t-Butanol, Octanol allein oder im Gemisch zugesetzt werden.

10. Monodisperse Kationenaustauscher vom Poly(meth)acrylsäure-Typ erhältlich durch
a) Bereitstellen eines monodispersen, perlförmigen, vernetzten Perlpolymerisat als Saat,
b) Versetzen dieses monodispersen, vernetzten Perlpolymerisat mit (Meth)acrylmonomeren, geeigneten Vernetzern und Initiatoren, wobei das Saatpolymerisat durch die (Meth)acrylmonomere aufquillt,
c) Polymerisieren der eingequollenen (Meth)acrylmonomere bei erhöhter Temperatur,
d) ggf. einfache oder mehrfache Wiederholung der Schritte b) und c) und
e) Hydrolysieren des enstandenen, monodispersen, vernetzten (Meth)acrylperlpolymeri-sat mit Säuren oder Laugen zu einem vernetzten, monodispersen (Meth)acrylsäure-Typ Perlpolymerisat.

11. Monodisperse Kationenaustauscher vom Poly(meth)acrylsäure-Typ gemäß Anspruch 10, **dadurch gekennzeichnet, dass** das Verhältnis aus dem 90 %-Wert (∅(90)) und dem 10 %-Wert (∅(10)) der Volumenverteilung, ∅(90)/∅(10), kleiner oder gleich 1,25 ist.

12. Monodisperse Kationenaustauscher vom Poly(meth)acrylsäure-Typ gemäß einem der Ansprüche 10 oder 11, **dadurch gekennzeichnet, dass** sie makroporös sind.

13. Verwendung der monodispersen Kationenaustauscher vom Poly(meth)acrylsäure-Typ gemäß einem der Ansprüche 10 bis 12
- zur Entfernung von Kationen, Farbpartikeln oder organischen Komponenten aus wässrigen oder organischen Lösungen,
- zur Enthärtung im Neutralaustausch von wässrigen oder organischen Lösungen,
- zur Reinigung und Aufarbeitung von Wässern der chemischen Industrie, der Elektronik-Industrie und aus Kraftwerken,
- zur Entfärbung und Entsalzung von Molken, Gelatinedünnbrühen, Fruchtsäften, Fruchtmosten und wässrigen Lösungen von Zuckern,
- zur Abtrennung und Reinigung von biologisch wirksamen Komponenten wie z.B. Antibiotika, Enzyme, Peptide und Nukleinsäuren aus deren Lösungen, beispielsweise aus Reaktionsgemischen und aus Fermentationsbrühen.
